(19) Europäisches Patentamt
European Patent Office
Office européen des brevets

(11) **EP 4 235 206 B1**

(12) **EUROPEAN PATENT SPECIFICATION**

(45) Date of publication and mention
of the grant of the patent:
**22.01.2025   Bulletin 2025/04**

(21) Application number: **23153675.6**

(22) Date of filing: **27.01.2023**

(51) International Patent Classification (IPC):
*G01S 5/02* (2010.01)          *H04W 64/00* (2009.01)

(52) Cooperative Patent Classification (CPC):
**G01S 5/0244; H04W 64/00;** G01S 5/021

(54) **APPARATUS COMPRISING AT LEAST ONE PROCESSOR**

VORRICHTUNG MIT MINDESTENS EINEM PROZESSOR

APPAREIL COMPRENANT AU MOINS UN PROCESSEUR

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **25.02.2022  FI 20225116**

(43) Date of publication of application:
**30.08.2023   Bulletin 2023/35**

(73) Proprietor: **Nokia Solutions and Networks Oy
02610 Espoo (FI)**

(72) Inventors:
• **HENNINGER, Marcus Roland
Ludwigsburg (DE)**
• **ABRUDAN, Traian
Espoo (FI)**
• **MANDELLI, Silvio
Ludwigsburg (DE)**

(74) Representative: **Nokia EPO representatives
Nokia Technologies Oy
Karakaari 7
02610 Espoo (FI)**

(56) References cited:
**WO-A1-2017/052978      WO-A1-2017/121581
WO-A2-2021/207707**

**Description**

**Field of the Disclosure**

Various example embodiments relate to an apparatus comprising at least one processor.

Further embodiments relate to a method of operating related to such apparatus.

**Background**

Location information, for example associated with a mobile device such as a mobile terminal device, e.g. user equipment (UE), for a communications system, can be used for applications such as e.g. navigation, asset tracking, industrial automation, healthcare, etc.

Some conventional localization approaches utilize time of arrival (ToA) or time difference of arrival (TDoA) measurements, where TDoA methods offer the advantage that an exact transmit time of a target to be tracked does not have to be known. Some TDoA-based localization techniques can for example be used in current 3rd Generation Partnership Project (3GPP) 4G and 5G positioning standards. WO2021/207707 A2 discloses determining a quality of a position estimate of a mobile device by calculating a TDOA residual error vector.

**Summary**

Various embodiments of the disclosure are set out by the independent claims. The exemplary embodiments and features, if any, described in this specification, that do not fall under the scope of the independent claims, are to be interpreted as examples useful for understanding various exemplary embodiments of the disclosure.

Some embodiments relate to an apparatus, comprising at least one processor, and at least one memory storing instructions, the at least one memory and the instructions configured to, with the at least one processor, cause the apparatus at least to determine a set of position estimates for a mobile device, wherein each position estimate of the set of position estimates is associated with a a) specific one of a plurality of K many receiver devices configured to receive a reference signal from the mobile device or b) a specific one of a plurality of K many transmitter devices configured to transmit reference signals to the mobile device, and to determine, based at least on the set of position estimates, a set of residual errors associated with at least some position estimates of the set of position estimates. In some embodiments, this enables to determine a position of the mobile device, and/or to assess a quality of the position estimates.

In some embodiments, an uplink TDoA ("UTDoA") configuration is e.g. characterized by the position estimates of the set of position estimates being associated with a specific one of a plurality of K many receiver devices configured to receive a reference signal from the mobile device.

In some embodiments, a downlink TDoA ("DTDoA") configuration is e.g. characterized by the position estimates of the set of position estimates being associated with a specific one of a plurality of K many transmitter devices configured to, for example simultaneously, transmit reference signals, e.g. positioning reference signals, to the mobile device.

Note that, in some embodiments, different values may be chosen for the number K of receiver devices or transmitter devices, e.g. depending on a specific implementation or precision requirements or the like.

In some embodiments, the number K of receiver devices is equal to or greater than 2.

In some embodiments, the number K of transmitter devices is equal to or greater than 2.

In some embodiments, e.g. related to a downlink TDoA configuration, K = K1 many transmitters may be used, whereas, in some other embodiments, e.g. related to a uplink TDoA configuration, K = K2 many transmitters may be used, wherein K1 may be different from K2.

In some embodiments, both an uplink TDoA and a downlink TDoA configuration may be used.

While the following description, for the sake of clarity, primarily refers to exemplary UTDoA configurations, the principle according to the embodiments can be applied both to a uplink TDOA configuration and a downlink TDoA configuration.

In some embodiments, the mobile device is a terminal device, for example UE, for a, for example cellular, communications network of e.g. the 5G and/or 6G type.

In some embodiments, e.g. related to an exemplary uplink TDoA configuration, at least some of the K many receiver devices are location measurement units, LMUs, which are configured to receive at least one reference signal of the mobile device, e.g. a sounding reference signal (SRS) of a 5G network. In some embodiments, the receiver devices are not equipped with a transmitter, but rather only a receiver for receiving the reference signal(s), e.g. of a mobile device a position of which is to be determined.

In some embodiments, e.g. related to an exemplary uplink TDoA configuration, at least some of the K many receiver devices can be implemented in the form of, comparatively inexpensive, reduced-functionality 5G sniffers, configured to sense or receive, respectively, the reference signal(s) transmitted by a mobile device a position of which is to be determined.

In some embodiments, e.g. related to an exemplary downlink TDoA configuration, at least some of the K many transmitter devices are reference signal transmission units, which are configured to transmit at least one reference signal, e.g. a positioning reference signal, e.g. of a 5G network, to the mobile device. In some embodiments, the transmitter devices are not equipped with a receiver, but rather only a transmitter for transmitting the reference signals to a mobile device a position of which is to be determined.

In some embodiments, e.g. related to an exemplary downlink TDOA configuration, at least some of the K many transmitter devices can be implemented in the form of, comparatively inexpensive, reduced-functionality 5G transmitters, e.g. configured to transmit the reference signals, e.g. positioning reference signals (PRS), to a mobile device a position of which is to be determined.

In some embodiments, e.g. related to an exemplary UTDoA configuration, at least some of the K many receiver devices can be tightly synchronized, for example to enable TDoA positioning.

In some embodiments, e.g. related to an exemplary DTDoA configuration, at least some of the K many transmitter devices can be tightly synchronized, for example to enable TDoA positioning.

In some embodiments, e.g. related to an exemplary UTDoA configuration, at least some of the K many receiver devices can be configured to transmit received reference signals and/or signals derived from received reference signals to the apparatus according to the embodiments, e.g. for evaluation, e.g. according to the principle of the embodiments.

In some embodiments, e.g. related to an exemplary DTDoA configuration, signals, e.g. positioning signals, received from the plurality of e.g. K many transmitter devices, and/or signals derived from the received (positioning) reference signals may be evaluated, e.g. according to the principle of the embodiments.

In some embodiments, the instructions, when executed by the at least one processor, cause the apparatus to determine updated weights for weighting the set of position estimates based on the set of residual errors. In some embodiments, this enables to attain more precise position estimates.

In some embodiments, the instructions, when executed by the at least one processor, cause the apparatus to determine an updated set of position estimates based on the updated weights.

In some embodiments, the instructions, when executed by the at least one processor, cause the apparatus to determine whether at least one termination criterion is met, and, based on the determination whether the at least one termination criterion is met, to repeat at least one of the preceding steps.

In some embodiments, this enables to provide an iterative procedure which enables to iteratively refine position estimates associated with the mobile device.

In some embodiments, the at least one termination criterion may e.g. comprise a maximum number of iterations.

In some embodiments, the at least one termination criterion may be based on a position mismatch characterizing a difference between a current position estimate and a position estimate of a previous iteration falling below a predetermined threshold.

In some embodiments, e.g. related to an exemplary UTDoA configuration, the instructions, when executed by the at least one processor, cause the apparatus to determine estimated distances associated with the plurality of receiver devices.

In some embodiments, e.g. related to an exemplary DTDoA configuration, the instructions, when executed by the at least one processor, cause the apparatus to determine estimated distances associated with the plurality of transmitter devices.

As mentioned above, the following description, for the sake of clarity, primarily refers to exemplary UTDoA configurations having a plurality of K many receiver devices. However, as also already mentioned above, the principle according to the embodiments can alternatively (or additionally) be applied to exemplary DTDOA configurations having a plurality of K many transmitter devices.

In some embodiments, e.g. related to exemplary UTDoA configurations, the K many receiver devices may be associated with three-dimensional (3D) positions, which, in some embodiments, may e.g. be characterized by a respective $3 \times 1$ vector $\mathbf{p}_k = [x_k, y_k, z_k]^T$.

In some embodiments, e.g. related to exemplary DTDoA configurations, the K many transmitter devices may be associated with 3D positions, which, in some embodiments, may e.g. be characterized by a respective $3 \times 1$ vector $\mathbf{p}_l = [x_l, y_l, z_l]^T$.

In some embodiments, e.g. related to exemplary UTDoA configurations, a distance estimate associated with the k-th receiver device may be denoted as $\hat{d}_k$.

In some embodiments, e.g. related to exemplary UTDoA configurations, a reference receiver device may be defined. As an example, in some embodiments, choosing e.g. a first receiver device as a reference receiver device, the *K - 1* distance differences associated with the receiver devices can be characterized by

$$\hat{d}_{k,1} = \hat{d}_k - \hat{d}_1, \ k = 2, \dots, K \ \texttt{[equation 1]}.$$

In some embodiments, e.g. related to exemplary UTDoA configurations, the instructions, when executed by the at least one processor, cause the apparatus to determine initial weights (e.g., one or more initial weights) for weighting the set of position estimates associated with at least one of the plurality of receiver devices.

In some embodiments, the instructions, when executed by the at least one processor, cause the apparatus to determine the initial weights based on at least one of: i) a reliability of estimated distances associated with a) the plurality of receiver devices or with b) the plurality of transmitter devices, ii) predetermined initial weight values.

In some embodiments, the reliability of the estimated distances associated with the plurality of receiver devices can e.g. be determined based on knowledge about a received signal strength, RSS, since, in some embodiments, multipath reflections tend to be weaker than a direct (line-of-sight) path.

Hence, in some embodiments, measurements, e.g. distance estimates, whose signal strengths are low, e.g. fall below a predetermined RSS threshold, may be downweighted, e.g. weighted with comparatively small weight factors, whereas measurements, e.g. distance estimates, whose signal strengths are high, e.g. exceed the RSS threshold, may receive more emphasis by using larger weight factors.

In some embodiments, if no RSS information or other information characterizing a reliability of the estimated distances associated with the plurality of receiver devices (or transmitter devices, e.g. in case of a downlink TDoA configuration) (or similar) are available, unit initial weights may be used for at least some, for example all, receiver devices (or transmitter devices, e.g. in case of a downlink TDoA configuration).

In some embodiments, e.g. related to exemplary UTDoA or DTDoA configurations, the instructions, when executed by the at least one processor, cause the apparatus to determine K many position estimates $\hat{\mathbf{x}}_1, \hat{\mathbf{x}}_2, ..., \hat{\mathbf{x}}_K$, and to determine a weighted average position estimate $\hat{\mathbf{x}}_{WA}$ based on the K many position estimates $\hat{\mathbf{x}}_1, \hat{\mathbf{x}}_2, ..., \hat{\mathbf{x}}_K$ and on at least one of initial weights and updated weights for weighting the set of position estimates.

In some embodiments, e.g. related to exemplary UTDoA or DTDoA configurations, for each position estimate of the K many position estimates $\hat{\mathbf{x}}_1, \hat{\mathbf{x}}_2, ..., \hat{\mathbf{x}}_K$, another receiver device of the K many receiver devices or transmitter device of the K many transmitter devices may be used as reference receiver device or reference transmitter device.

In other words, in some embodiments, e.g. related to exemplary UTDoA or DTDoA configurations, instead of determining a unique reference receiver device or reference transmitter device, which may e.g. be the one that is, for example, a-priori considered the most reliable one (e.g., always the one with the lowest distance estimate) before computing X, it is proposed to use every receiver device or transmitter device of the K many receiver devices or transmitter devices as a reference receiver device or as a reference transmitter device once to obtain the K many position estimates $\hat{\mathbf{x}}_1, \hat{\mathbf{x}}_2, ..., \hat{\mathbf{x}}_K$, e.g. in the form of a matrix with K distinct position estimates $\hat{\mathbf{X}} = [\hat{\mathbf{x}}_1, \hat{\mathbf{x}}_2, ..., \hat{\mathbf{x}}_K]$.

In some embodiments, an estimate of the mobile device's position $\mathbf{x} = [x, y, z]^T$ may e.g. be obtained by solving an equation system, characterized e.g. by:

$$\mathbf{A}\boldsymbol{\theta} = \mathbf{b} + \mathbf{n}, \text{ [equation 2],}$$

with

$$\mathbf{A} = \begin{bmatrix} (\mathbf{p}_2 - \mathbf{p}_1)^T & \hat{d}_{2,1} \\ (\mathbf{p}_3 - \mathbf{p}_1)^T & \hat{d}_{3,1} \\ \vdots & \vdots \\ (\mathbf{p}_K - \mathbf{p}_1)^T & \hat{d}_{K,1} \end{bmatrix}, \text{ [equation 3],}$$

$$\boldsymbol{\theta} = [x - x_1, y - y_1, z - z_1, d_1]^T, \text{ [equation 4],}$$

and with

$$\mathbf{b} = \frac{1}{2} \begin{bmatrix} \|\mathbf{p}_2 - \mathbf{p}_1\|^2 - \hat{d}_{2,1}^2 \\ \|\mathbf{p}_3 - \mathbf{p}_1\|^2 - \hat{d}_{3,1}^2 \\ \vdots \\ \|\mathbf{p}_K - \mathbf{p}_1\|^2 - \hat{d}_{K,1}^2 \end{bmatrix}, \text{ [equation 5],}$$

where $d_1 = \|\mathbf{x} - \mathbf{p}_1\|$ (nuisance parameter), and wherein $\mathbf{n}$ is a noise vector.

In some embodiments, a closed-form approximate weighted least squares (WLS) solution of equation 2 can be

obtained as

$$\widehat{\boldsymbol{\theta}} = (\mathbf{A}^T \mathbf{W} \mathbf{A})^{-1} \mathbf{A}^T \mathbf{W} \mathbf{b}, \quad \texttt{[equation 6]},$$

where $\mathbf{W} = \text{diag}\{w_2, ..., w_K\}$ is a weighting matrix comprising the weights for weighting the distance difference estimates, i.e., $d_{k,1}$.

In some embodiments, the position estimates $\hat{\mathbf{x}}$ can be determined by adding e.g. the first three elements $\hat{\theta}_{1:3}$ of the WLS solution from Eq. (6) to the position $\mathbf{p}_1$ of a, for example reference, receiver device: $\hat{\mathbf{x}} = \mathbf{p}_1 + \hat{\theta}_{1:3}$, e.g. using the WLS estimator according to equation 6.

In some embodiments, the weighted average position estimate may be obtained as

$$\hat{\mathbf{x}}_{WA} = \sum_{k=1}^{K} w_{norm,k} \cdot \hat{\mathbf{x}}_k, \quad \texttt{[equation 8]}$$

where $w_{norm,k}$ represents a normalized $k$-th weight (e.g. associated with the k-th receiver device or transmitter device), wherein, in some embodiments, a normalization such that $\sum_{k=1}^{K} w_{norm,k} = 1$ is proposed.

In other words, in some embodiments, for determining the weighted average position estimate $\hat{\mathbf{x}}_{WA}$, multiple individual WLS estimates $\hat{\mathbf{x}}_k$ are combined in a weighted fashion.

In some embodiments, e.g. in order to detect receiver devices or transmitter device with erroneous measurements, a measure of a reliability of the position estimates of at least some, for example all, receiver device or transmitter device is provided. In some embodiments, the measure of reliability indicates to which extent the respective estimate can be "trusted".

Hence, in some embodiments, e.g. related to exemplary UTDoA configurations, the instructions, when executed by the at least one processor, cause the apparatus to determine a residual error $e_k$ of a position estimate associated with a k-th receiver device based on $e_k = \frac{1}{K-1} \sum_{k=1}^{K} \left| (\hat{d}_k - d_1) - (\|\hat{\mathbf{x}}_{WA} - \mathbf{p}_k\| - \|\hat{\mathbf{x}}_{WA} - \mathbf{P}_1\|) \right|$ ([equation 9]), wherein $\hat{d}_k$ characterizes an estimated distance associated with the k-th receiver device, wherein $d_1 = \|\mathbf{x} - \mathbf{p}_1\|$, wherein $\hat{\mathbf{x}}_{WA}$ characterizes a weighted average position estimate, wherein $\mathbf{p}_k$ characterizes a position of the k-the receiver device, wherein $\mathbf{p}_1$ characterizes a position of a first receiver device.

Similarly, in some embodiments, e.g. related to exemplary DTDoA configurations, the instructions, when executed by the at least one processor, cause the apparatus to determine a residual error $e_k$ of a position estimate associated with a k-th transmitter device based on $e_k = \frac{1}{K-1} \sum_{k=1}^{K} \left| (\hat{d}_k - d_1) - (\|\hat{\mathbf{x}}_{WA} - \mathbf{p}_k\| - \|\hat{\mathbf{x}}_{WA} - \mathbf{p}_1\|) \right|$ ([equation 9']), wherein $\hat{d}_k$ characterizes an estimated distance associated with the k-th transmitter device, wherein $d_1 = \|\mathbf{x} - \mathbf{p}_1\|$, wherein $\hat{\mathbf{x}}_{WA}$ characterizes a weighted average position estimate, wherein $\mathbf{p}_k$ characterizes a position of the k-the transmitter device, wherein $\mathbf{p}_1$ characterizes a position of a first transmitter device.

In some embodiments, e.g. related to exemplary UTDoA configurations or DTDoA configurations, the instructions, when executed by the at least one processor, cause the apparatus to determine whether a residual error of a position estimate associated with a k-th receiver device or transmitter device exceeds a threshold, and, if the residual error of the position estimate associated with a k-th receiver device or transmitter device exceeds the threshold, to discard the k-th receiver device or transmitter device.

In some embodiments, e.g. related to exemplary UTDoA or DTDoA configurations, discarding the k-th receiver device or transmitter device comprises disregarding signals or measurements provided by the k-th receiver device or transmitter device, e.g. for determining position estimates.

In some embodiments, the residual error as exemplarily characterized by equations 9, 9' represents an averaged deviation between estimated distance differences of $K - 1$ many receiver devices or transmitter devices and a reference receiver device or a reference transmitter device, and actual distance differences (i.e., w.r.t. a current estimate $\hat{\mathbf{x}}_{WA}$) of the $K - 1$ receiver devices or transmitter devices and the reference receiver device or the reference transmitter device.

In some embodiments, using this formulation of equations 9 or 9', the residual error may be interpreted as a measure of how much the measured distance differences agree, e.g. correlate, with a current position estimate $\hat{\mathbf{x}}_{WA}$ or - to put it another way - with the distance differences that would result if the mobile device, e.g. UE, were located at a position characterized by $\hat{\mathbf{x}}_{WA}$.

In some embodiments, e.g. related to exemplary UTDoA configurations, the proposed approach according to the embodiments enables to avoid the choice of a "bad" reference receiver device, wherein e.g. an outlier measurement, which is e.g. associated with a reference receiver device, may severely affect all distance differences e.g. according to equation 1, which, in some embodiments, may e.g. be used to determine a final, e.g. WLS-based, position estimate.

In some embodiments, similar observations also apply to exemplary DTDoA configurations, wherein the proposed approach according to the embodiments enables to avoid the choice of a "bad" reference transmitter device.

Advantageously, in some embodiments, considering a situation with a "bad" reference receiver device or reference transmitter device, an associated residual error will have a comparatively high value, allowing the detection of receiver devices or transmitter devices with e.g. unreliable measurements, and, in some embodiments, downweighting their contribution, e.g. in equation 8, e.g. according to a magnitude of the residual error they produce.

In some embodiments, e.g. after computing a residual error, e.g. based on equation 9 or equation 9', e.g. for all position estimates, updated weights, which may be used for a next iteration, may be obtained as

$$w_k = f_e(e_k), \quad \texttt{[equation 10]},$$

where, in some embodiments, $f_e()$ is a monotonically increasing function that maps the magnitude of the residual errors $e_k$ e.g. to numbers between 0 and 1.

In some embodiments, for the mapping of the magnitude of the residual errors $e_k$ to the interval between 0 and 1, a function of the following types may be used: Andrew's sine wave, Huber loss, etc.

As already mentioned above, in some embodiments, e.g. related to exemplary UTDoA configurations, if the residual error $e_k$ exceeds a pre-defined maximum value, the corresponding weight may be set to zero, e.g. such that the measurement - and thus also the receiver device, in some embodiments - is discarded.

In some embodiments, this is also applicable to exemplary DTDoA configurations, wherein, if the residual error $e_k$ associated with a specific transmitter device exceeds a pre-defined maximum value, the corresponding weight may be set to zero, e.g. such that the measurement - and thus also the transmitter device, in some embodiments - is discarded.

In some embodiments, e.g. related to exemplary UTDoA configurations or exemplary DTDoA configurations, the above-described procedure may be iterated, yielding a robust iteratively reweighted least squares (IRLS) estimator that can e.g. detect and/or reject receiver devices or transmitter device with outlier measurements and/or that can find weights for the remaining receiver devices or transmitter devices or their measurements, respectively, e.g. based on their residual errors.

In some embodiments, after each iteration, a difference of a current position estimate to a position estimate of the previous iteration may be determined, e.g. computed, based on

$$\Delta = \left\| \hat{\mathbf{x}}_{WA,i} - \hat{\mathbf{x}}_{WA,i-1} \right\|, \quad \texttt{[equation 11]}.$$

In some embodiments, the difference $\Delta$ may e.g. be compared to a pre-defined threshold $\varepsilon$, e.g. to check convergence.

In some embodiments, based on the comparison of the difference $\Delta$ with the pre-defined threshold $\varepsilon$, a termination criterion may be set, e.g. to stop the process, preventing further iterations to be made.

While the exemplary embodiments explained above primarily refer to exemplary UTDoA configurations, the principle according to the embodiments can similarly be applied to DTDoA configurations.

Further embodiments relate to an apparatus comprising means for determining a set of position estimates for a mobile device, wherein each position estimate of the set of position estimates is associated with a) a specific one of a plurality of K many receiver devices configured to receive a reference signal from the mobile device or b) a specific one of a plurality of K many transmitter devices configured to transmit reference signals to the mobile device, and for determining, based at least on the set of position estimates, a set of residual errors associated with at least some position estimates of the set of position estimates.

Further embodiments relate to a location server for estimating a position of a mobile device which is configured to transmit at least one reference signal, comprising at least one apparatus according to the embodiments.

Further embodiments relate to a system for estimating a position of a mobile device which is configured to transmit at least one reference signal, comprising at least one apparatus according to the embodiments and K, K>=2, many receiver devices and/or K many transmitter devices.

Further embodiments relate to a method comprising: determining a set of position estimates for a mobile device, wherein each position estimate of the set of position estimates is associated with a) a specific one of a plurality of K many receiver devices configured to receive a reference signal from the mobile device or b) a specific one of a plurality of K many transmitter devices configured to transmit reference signals to the mobile device, and determining, based at least on the set of position estimates, a set of residual errors associated with at least some position estimates of the set of position estimates.

Further embodiments relate to a computer program product comprising instructions which, when the program is executed by a computer, cause the computer to carry out the method according to the embodiments.

Further embodiments relate to a data carrier signal carrying and/or characterizing the computer program (product).

**Brief description of the Figures**

Fig. 1A    schematically depicts a simplified block diagram according to some embodiments,

Fig. 1B    schematically depicts a simplified block diagram according to some embodiments,

Fig. 2A    schematically depicts a simplified block diagram array according to some embodiments,

Fig. 2B    schematically depicts a simplified block diagram array according to some embodiments,

Fig. 3     schematically depicts a simplified flow chart according to some embodiments,

Fig. 4     schematically depicts a simplified flow chart according to some embodiments,

Fig. 5     schematically depicts a simplified flow chart according to some embodiments,

Fig. 6     schematically depicts a simplified flow chart according to some embodiments,

Fig. 7     schematically depicts a simplified flow chart according to some embodiments,

Fig. 8A    schematically depicts a scenario according to some embodiments,

Fig. 8B    schematically depicts a scenario according to some embodiments,

Fig. 9     schematically depicts a simplified block diagram according to some embodiments.

**Description of some Exemplary Embodiments**

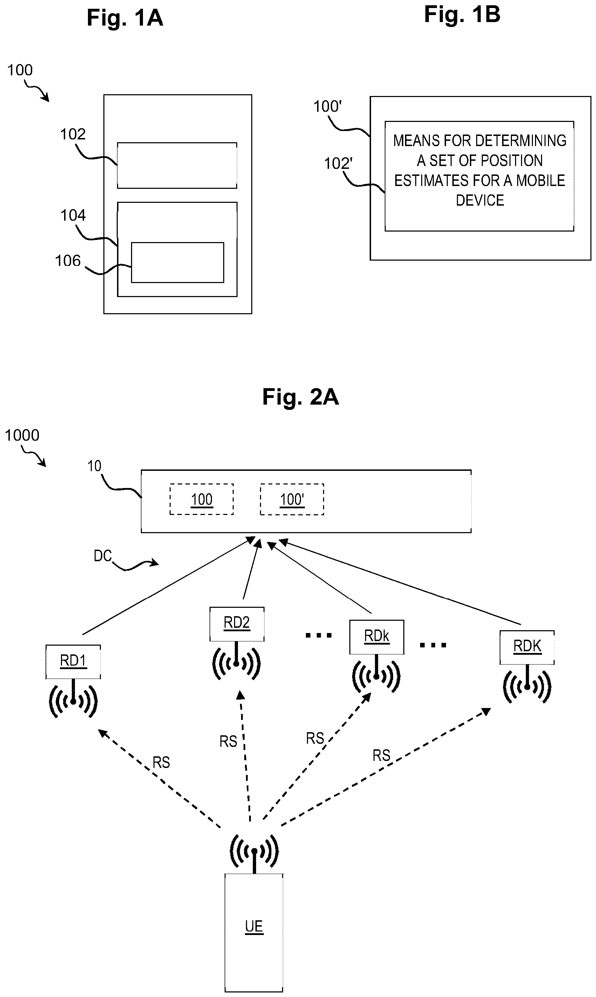

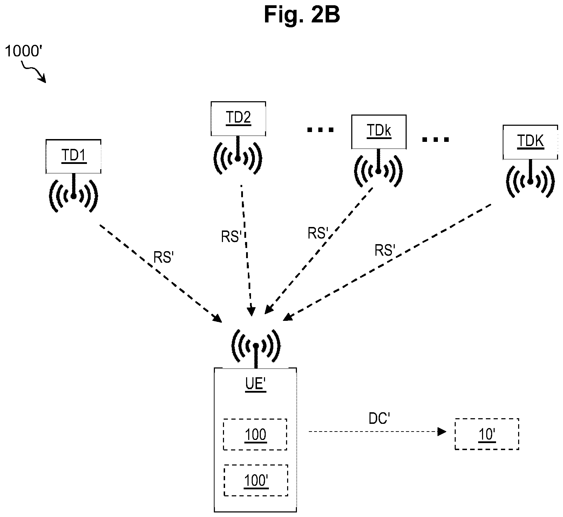

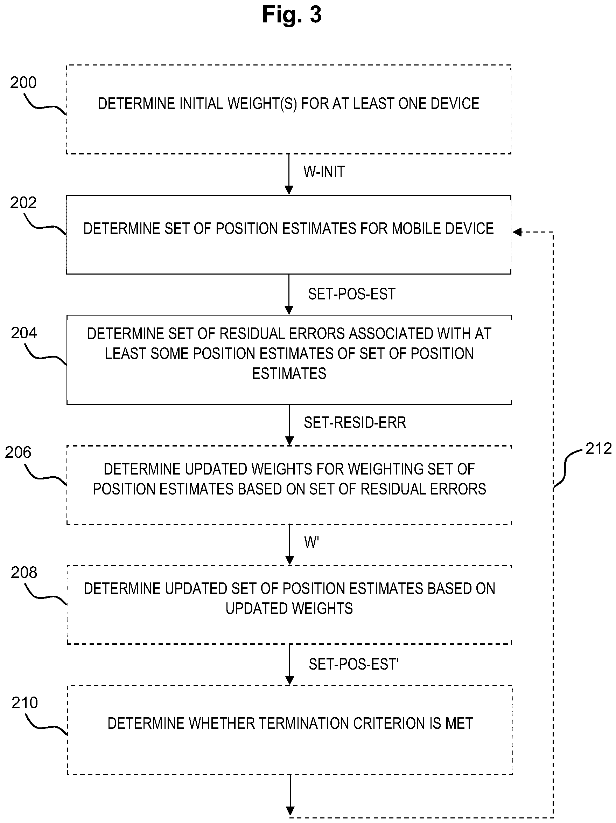

Some embodiments, see for example Fig. 1A, relate to an apparatus 100, comprising at least one processor 102, and at least one memory 104 storing instructions 106, the at least one memory 104 and the instructions 106 configured to, with the at least one processor 102, cause the apparatus 100 at least to determine 202 (Fig. 3) a set of position estimates SET-POS-EST for a mobile device UE (Fig. 2A), wherein each position estimate of the set SET-POS-EST of position estimates is associated with a) a specific one of a plurality of K many receiver devices RD1, RD2, ..., RDk, ..., RDK (Fig. 2A) configured to receive a reference signal RS from the mobile device UE (e.g., in case of exemplary UTDoA configurations as exemplarily depicted by Fig. 2A) or b) a specific one of a plurality of K many transmitter devices TD1, TD2, ..., TDk, ..., TDK (Fig. 2B) configured to transmit reference signals RS' to the mobile device UE (e.g., in case of exemplary DTDoA configurations as exemplarily depicted by Fig. 2B), and to determine 204 (Fig. 3), based at least on the set SET-POS-EST of position estimates, a set SET-RESID-ERR of residual errors associated with at least some position estimates of the set SET-POS-EST of position estimates.

In some embodiments, this enables to determine a position of the mobile device UE, and/or to assess a quality of the position estimates.

In some embodiments, Fig. 2A, 2B, the mobile device UE, UE' is a terminal device, for example user equipment (UE), for a, for example cellular, communications network of e.g. the 5G and/or 6G type.

In some embodiments, Fig. 2A, at least some of the K many receiver devices RD1, RD2, ..., RDk, ..., RDK are location measurement units, LMU, which are configured to receive at least one reference signal RS of the mobile device, e.g. a sounding reference signal (SRS) of a 5G network. In some embodiments, the receiver devices RD1, RD2, ..., RDk, ..., RDK are not equipped with a transmitter, but rather only a receiver (not shown) for receiving the reference signal(s) RS, e.g. of a mobile device UE a position of which is to be determined.

In some embodiments, at least some of the K many receiver devices RD1, RD2, ..., RDk, ..., RDK can be implemented in the form of, for example comparatively inexpensive, reduced-functionality 5G sniffers, configured to sense or receive, respectively, the reference signal(s) RS transmitted by a mobile device UE a position of which is to be determined.

In some embodiments, at least some of the K many receiver devices RD1, RD2, ..., RDk, ..., RDK are configured to perform TDoA measurements based on the reference signal RS.

In some embodiments, at least some of the K many receiver devices RD1, RD2, ..., RDk, ..., RDK can be tightly synchronized, for example to enable TDoA positioning.

In some embodiments, at least some of the K many receiver devices RD1, RD2, ..., RDk, ..., RDK can be configured to transmit received reference signals RS and/or signals derived from received reference signals to the apparatus 100 according to the embodiments, e.g. via data connections DC, e.g. for evaluation, e.g. according to the principle of the embodiments.

In some embodiments, the data connections DC may enable sub-nanosecond synchronization among the receiver devices RD1, RD2, ..., RDk, ..., RDK, e.g. by using a synchronization protocol such as, but not limited to, the White Rabbit protocol.

In some embodiments, a location server 10 may be provided, e.g. comprising the apparatus 100, for processing incoming signals from the receiver devices RD1, RD2, ..., RDk, ..., RDK, e.g. to obtain distance estimates. The location server 10, or the apparatus 100, respectively, may be configured to perform the method according to the embodiments exemplarily explained below.

In other words, in some embodiments, the location server 10 may e.g. be configured to receive received reference signals and/or signals derived from received reference signals from at least some of the K many receiver devices RD1, ..., RDK, e.g. for processing, e.g. according to a method according to the embodiments exemplarily explained below.

In some embodiments, Fig. 2B, e.g. related to an exemplary downlink TDoA configuration, at least some of the K many transmitter devices TD1, TD2, ..., TDk, ..., TDK are reference signal transmission units, which are configured to transmit at least one reference signal RS', e.g. positioning reference signals, e.g. of a 5G network, to the mobile device UE'. In some embodiments, the transmitter devices TD1, TD2, ..., TDk, ..., TDK are not equipped with a receiver, but rather only a transmitter for transmitting the reference signals RS' to a mobile device UE' a position of which is to be determined.

In some embodiments, Fig. 2B, e.g. related to an exemplary downlink TDOA configuration, at least some of the K many transmitter devices TD1, TD2, ..., TDk, ..., TDK can be implemented in the form of, comparatively inexpensive, reduced-functionality 5G transmitters, e.g. configured to transmit the reference signals RS', e.g. positioning reference signals (PRS), to a mobile device UE' a position of which is to be determined.

In some embodiments, e.g. related to the exemplary DTDoA configuration of Fig. 2B, reference signals, e.g. positioning reference signals, RS' received from the plurality of e.g. K many transmitter devices, and/or signals derived from the received (positioning) reference signals RS' may be evaluated, e.g. according to the principle of the embodiments, e.g. by an apparatus 10'.

In some embodiments, the apparatus 10' may be configured to perform the method according to the embodiments. In some embodiments (not shown), the apparatus 10' or its functionality, respectively, may also be integrated in the UE'.

In other embodiments, the UE' of Fig. 2B may also comprise at least one of the apparatus 100, 100' or the respective functionality.

While the following description of some exemplary embodiments, for the sake of clarity, primarily refers to exemplary UTDoA configurations as exemplarily depicted by Fig. 2A, the principle according to the embodiments can be applied both to uplink TDOA configurations (Fig. 2A) and downlink TDoA configurations, as e.g. depicted by Fig. 2B.

In some embodiments, Fig. 3, the instructions 106 (Fig. 1A), when executed by the at least one processor 102, cause the apparatus 100 to determine 206 updated weights W' for weighting the set SET-POS-EST of position estimates based on the set SET-RESID-ERR of residual errors. In some embodiments, this enables to attain more precise position estimates.

In some embodiments, Fig. 3, the instructions 106, when executed by the at least one processor 102, cause the apparatus 100 to determine 208 an updated set SET-POS-EST' of position estimates based on the updated weights W'.

In some embodiments, Fig. 3, the instructions 106, when executed by the at least one processor 102, cause the apparatus 100 to determine 210 whether at least one termination criterion is met, and, based on the determination 210 whether the at least one termination criterion is met, to repeat at least one of the preceding steps 202, 204, 206, 208.

In some embodiments, this enables to provide an iterative procedure which enables to iteratively refine position estimates associated with the mobile device UE.

In some embodiments, the at least one termination criterion may e.g. comprise a maximum number of iterations.

In some embodiments, the at least one termination criterion may be based on a position mismatch characterizing a difference between a current position estimate and a position estimate of a previous iteration falling below a predetermined threshold.

In some embodiments, Fig. 1, the apparatus 100 is configured to perform at least some of the following aspects: Some initial weights W-INIT are determined, see for example block 200 of Fig. 3. In some embodiments, a reliability of each receiver device RD1, ..., RDK (or, in case of exemplary DTDoA configurations, a reliability of each transmitter device TD1, ..., TDK, see Fig. 2B) may be pre-assessed, e.g. based on RSSI (Received Signal Strength Indicator), initial distance estimates, or from previous data.

In some embodiments, for each active receiver device (Fig. 2A), a position estimate with that receiver device as reference receiver device is determined. In some embodiments, this produces a set of candidate location estimates $\hat{X}$, each for example corresponding to a receiver device as reference locator. Note that, in this way, in some embodiments, one can weight less (or even reject) some of the candidate location estimates, e.g. corresponding to the receiver devices experiencing a bad/outlier measurement.

Similarly, in some embodiments, e.g. in case of exemplary DTDoA configurations (Fig. 2B), for each active transmitter device, a position estimate with that transmitter device as reference transmitter device is determined. In some embodiments, this produces a set of candidate location estimates $\hat{X}$, each for example corresponding to a transmitter device as reference locator. Note that, in this way, in some embodiments, one can weight less (or even reject) some of the candidate location estimates, e.g. corresponding to the transmitter devices experiencing a bad/outlier measurement.

In some embodiments, residual errors are determined, which e.g. rely on distance differences between pairs of locators, e.g. receiver devices (or, in case of exemplary DTDoA configurations (Fig. 2B), transmitter devices). In some embodiments, the residual errors are used to determine new, e.g. updated, weights W' (see also block 206 of Fig. 3) for each receiver device (or, in case of exemplary DTDoA configurations (Fig. 2B), for each transmitter device).

In some embodiments, the position estimate is refined with the new, i.e. updated, weights W', see e.g. block 208 of Fig. 3.

In some embodiments, if a maximum number of iterations is reached or a stopping or termination criterion is met (e.g., the difference between the current location estimate and the previous one is below a threshold), the procedure can be stopped. Otherwise, one could continue, see arrow 212 of Fig. 3, e.g. by feeding block 202 with the updated weights W'.

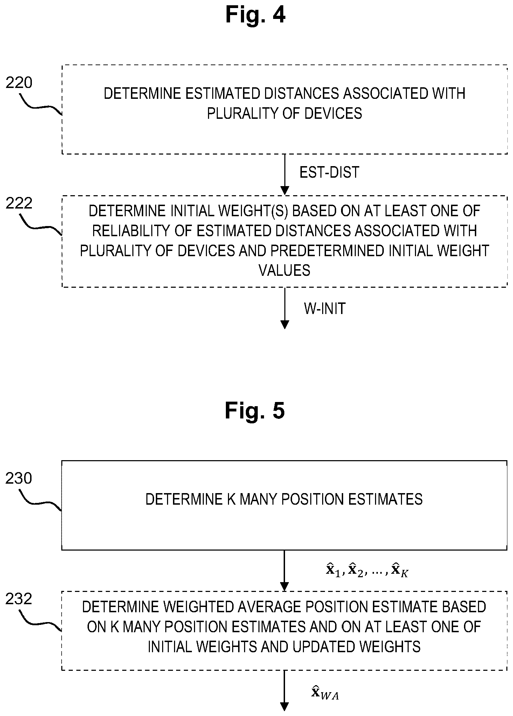

In some embodiments, Fig. 4, the instructions 106 (Fig. 1A), when executed by the at least one processor 102, cause the apparatus 100 to determine 220 estimated distances EST-DIST associated with the plurality of receiver devices RD1, ..., RDK (Fig. 2A), e.g. according to a time difference of arrival, TDoA, technique. Similarly, in some embodiments, e.g. in case of exemplary DTDoA configurations (Fig. 2B), a corresponding approach for the plurality of transmitter devices TD1, ..., TDK is also possible.

In some embodiments, Fig. 2A, the K many receiver devices RD1, ..., RDK may be associated with three-dimensional (3D) positions, which, in some embodiments, may e.g. be characterized by a respective $3 \times 1$ vector $\mathbf{p}_k = [x_k, y_k, z_k]^T$. Similarly, in some embodiments, e.g. in case of exemplary DTDoA configurations (Fig. 2B), a corresponding approach for the plurality of transmitter devices TD1, ..., TDK is also possible.

In some embodiments, a distance estimate at the $k$-th receiver device RDk may be denoted as $\hat{d}_k$.

Similarly, in some embodiments, e.g. in case of exemplary DTDoA configurations (Fig. 2B), a corresponding approach for the plurality of transmitter devices TD1, ..., TDK is also possible. In some embodiments, this also applies to the further exemplary embodiments.

In some embodiments, a reference receiver device may be defined. As an example, in some embodiments, choosing e.g. a first receiver device RD1 as a reference receiver device, the $K$ - 1 distance differences associated with the receiver devices can be characterized by

$$\hat{d}_{k,1} = \hat{d}_k - \hat{d}_1, \ k = 2, ..., K \quad \texttt{[equation 1]}.$$

In some embodiments, Fig. 4, the instructions 106 (Fig. 1A), when executed by the at least one processor 102, cause the apparatus 100 to determine 222 initial weights W-INIT (see also the optional block 200 of Fig. 3) for weighting the set SET-POS-EST (Fig. 3) of position estimates associated with at least one of the plurality of receiver devices.

In some embodiments, the instructions 106, when executed by the at least one processor 102, cause the apparatus 100 to determine 222 the initial weights W-INIT based on at least one of: a) a reliability of estimated distances associated with the plurality of receiver devices, b) predetermined initial weight values.

In some embodiments, the reliability of the estimated distances associated with the plurality of receiver devices can e.g. be determined based on knowledge about a received signal strength, RSS, since, in some embodiments, multipath reflections tend to be weaker than a direct (line-of-sight) path.

Hence, in some embodiments, measurements, e.g. distance estimates, whose signal strengths are low, e.g. fall below a predetermined RSS threshold, may be downweighted, e.g. weighted with comparatively small weight factors, whereas measurements, e.g. distance estimates, whose signal strengths are high, e.g. exceed the RSS threshold, may receive more emphasis by using larger weight factors.

In some embodiments, if no RSS information or other information characterizing a reliability of the estimated distances associated with the plurality of receiver devices (or similar) are available, unit initial weights may be used for at least some, for example all, receiver devices.

In some embodiments, Fig. 5, the instructions 106, when executed by the at least one processor 100, cause the apparatus 100 to determine 230 K many position estimates $\hat{\mathbf{x}}_1, \hat{\mathbf{x}}_2, ..., \hat{\mathbf{x}}_K$, and to determine 232 a weighted average position estimate $\hat{\mathbf{x}}_{WA}$ based on the K many position estimates $\hat{\mathbf{x}}_1, \hat{\mathbf{x}}_2, ..., \hat{\mathbf{x}}_K$ and on at least one of initial weights W-INIT and updated weights W' for weighting the set SET-POS-EST of position estimates.

In some embodiments, for each position estimate of the K many position estimates $\hat{\mathbf{x}}_1, \hat{\mathbf{x}}_2, ..., \hat{\mathbf{x}}_K$, another receiver device of the K many receiver devices may be used as reference receiver device.

In other words, in some embodiments, instead of determining a unique reference receiver device, which may e.g. be the one that is, for example, a-priori considered the most reliable one (e.g., always the one with the lowest distance estimate) before computing $\hat{\mathbf{x}}$, it is proposed to use every receiver device of the K many receiver devices as a reference receiver device once to obtain the K many position estimates $\hat{\mathbf{x}}_1, \hat{\mathbf{x}}_2, ..., \hat{\mathbf{x}}_K$, e.g. in the form of a matrix with K distinct position estimates $\hat{\mathbf{X}} = [\hat{\mathbf{x}}_1, \hat{\mathbf{x}}_2, ..., \hat{\mathbf{x}}_K]$ .

In some embodiments, an estimate of the mobile device's position $\mathbf{x} = [x, y, z]^T$ may e.g. be obtained by solving an equation system, e.g. characterized by:

$$\mathbf{A\theta} = \mathbf{b} + \mathbf{n}, \quad \texttt{[equation 2]},$$

with

$$\mathbf{A} = \begin{bmatrix} (\mathbf{p}_2 - \mathbf{p}_1)^T & \hat{d}_{2,1} \\ (\mathbf{p}_3 - \mathbf{p}_1)^T & \hat{d}_{3,1} \\ \vdots & \vdots \\ (\mathbf{p}_K - \mathbf{p}_1)^T & \hat{d}_{K,1} \end{bmatrix}, \quad \texttt{[equation 3]},$$

$$\mathbf{\theta} = [x - x_1, y - y_1, z - z_1, d_1]^T, \quad \texttt{[equation 4]},$$

and with

$$\mathbf{b} = \frac{1}{2}\begin{bmatrix} \|\mathbf{p}_2 - \mathbf{p}_1\|^2 - \hat{d}_{2,1}^2 \\ \|\mathbf{p}_3 - \mathbf{p}_1\|^2 - \hat{d}_{3,1}^2 \\ \vdots \\ \|\mathbf{p}_K - \mathbf{p}_1\|^2 - \hat{d}_{K,1}^2 \end{bmatrix}, \quad \texttt{[equation 5]},$$

where $d_1 = \|\mathbf{x} - \mathbf{p}_1\|$ (nuisance parameter), and wherein $\mathbf{n}$ is a noise vector.

In some embodiments, a closed-form approximate weighted least squares (WLS) solution of equation 2 can be obtained as

$$\hat{\mathbf{\theta}} = (\mathbf{A}^T\mathbf{W}\mathbf{A})^{-1}\mathbf{A}^T\mathbf{W}\mathbf{b}, \quad \texttt{[equation 6]},$$

where $\mathbf{W} = \mathrm{diag}\{w_2, ..., w_K\}$ is a weighting matrix comprising the weights for weighting distance difference estimates, i.e., $\hat{d}_{k,1}$.

In some embodiments, the position estimates $\hat{\mathbf{x}}$ can be determined by adding e.g. the first three elements $\hat{\theta}_{1:3}$ of the WLS solution from Eq. (6) to the position $\mathbf{p}_1$ of a, for example reference, receiver device: $\hat{\mathbf{x}} = \mathbf{p}_1 + \hat{\theta}_{1:3}$, e.g. using the WLS estimator according to equation 6.

In some embodiments, the weighted average position estimate may be obtained as

$$\hat{\mathbf{x}}_{WA} = \sum_{k=1}^{K} w_{norm,k} \cdot \hat{\mathbf{x}}_k, \quad \texttt{[equation 8]}$$

where $w_{norm,k}$ represents a normalized $k$-th weight (e.g. associated with the k-the receiver device RDk (Fig. 2A)), wherein, in some embodiments, a normalization such that

$$\sum_{k=1}^{K} w_{norm,k} = 1$$

is proposed.

In other words, in some embodiments, for determining 232 (Fig. 5) the weighted average position estimate $\hat{\mathbf{x}}_{WA}$, multiple individual WLS estimates $\hat{\mathbf{x}}_k$ are combined in a weighted fashion.

In some embodiments, e.g. in order to detect receiver devices with erroneous measurements, a measure of a reliability of the position estimates of at least some, for example all, receiver device is provided. In some embodiments, the measure of reliability indicates to which extent the respective estimate can be "trusted".

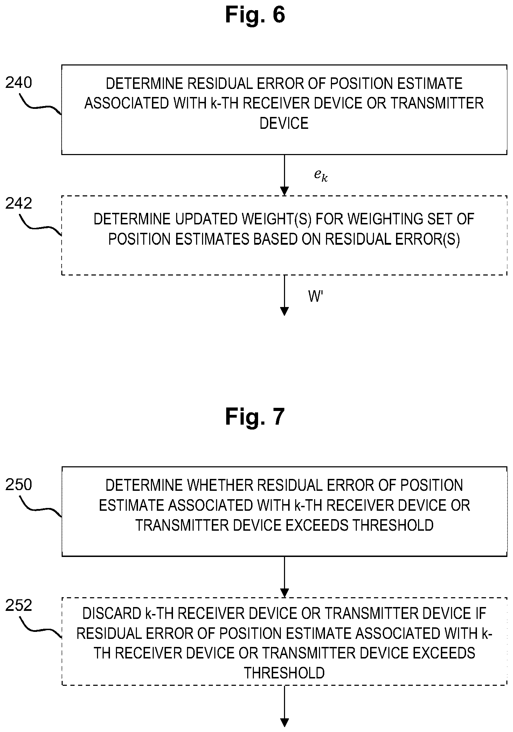

Hence, in some embodiments, Fig. 6, the instructions 106 (Fig. 1A), when executed by the at least one processor 102, cause the apparatus 100 to determine 240 a residual error $e_k$ of a position estimate associated with a k-th receiver device RDk based on $e_k = \frac{1}{K-1}\sum_{k=1}^{K}\left|(\hat{d}_k - d_1) - (\|\hat{\mathbf{x}}_{WA} - \mathbf{p}_k\| - \|\hat{\mathbf{x}}_{WA} - \mathbf{p}_1\|)\right|$ ([equation 9]), wherein $\hat{d}_k$ characterizes an estimated distance associated with the k-th receiver device RDk, wherein $d_1 = \|\mathbf{x} - \mathbf{p}_1\|$, wherein $\hat{\mathbf{x}}_{WA}$ characterizes a weighted average position estimate, wherein $\mathbf{p}_k$ characterizes a position of the k-the receiver device RDk, wherein $\mathbf{p}_1$ characterizes a position of a first receiver device RD1.

In some embodiments, based on the residual error $e_k$, updated weights W' may be determined, see block 242 of Fig. 6.

In some embodiments, Fig. 7, the instructions 106 (Fig. 1A), when executed by the at least one processor 102, cause the apparatus 100 to determine 250 whether a residual error $e_k$ of a position estimate associated with a k-th receiver device RDk exceeds a threshold, and, if the residual error $e_k$ of the position estimate associated with the k-th receiver device RDk exceeds the threshold, to discard 252 the k-th receiver device RDk.

In some embodiments, discarding 252 the k-th receiver device RDk comprises disregarding signals or measurements provided by the k-th receiver device RDk, e.g. for determining position estimates.

In some embodiments, the residual error $e_k$ as exemplarily characterized by equation 9 represents an averaged deviation between estimated distance differences of $K - 1$ many receiver devices and a reference receiver device, and actual distance differences (i.e., w.r.t. a current estimate $\hat{\mathbf{x}}_{WA}$) of the $K - 1$ receiver devices and the reference receiver device.

In some embodiments, using the formulation of equation 9, the residual error $e_k$ may be interpreted as a measure of how much the measured distance differences agree, e.g. correlate, with a current position estimate $\hat{\mathbf{x}}_{WA}$ or - to put it another way - with the distance differences that would result if the mobile device UE were located at a position characterized by $\hat{\mathbf{x}}_{WA}$.

In some embodiments, the proposed approach according to the embodiments enables to avoid the choice of a "bad" reference receiver device, wherein e.g. an outlier measurement, which is e.g. associated with a reference receiver device, may severely affect all distance differences e.g. according to equation 1, which, in some embodiments, may e.g. be used to determine a final, e.g. WLS-based, position estimate.

Advantageously, in some embodiments, considering a situation with a "bad" reference receiver device, an associated residual error $e_k$ will have a comparatively high value, allowing the detection of receiver devices with e.g. unreliable measurements, and, in some embodiments, downweighting their contribution, e.g. in equation 8, e.g. according to a magnitude of the residual error they produce, or, in some embodiments, discarding such receiver devices, see block 252 of Fig. 7.

In some embodiments, e.g. after determining, e.g. computing, the residual error $e_k$, e.g. based on equation 9, e.g. for all position estimates, updated weights W', which may be used for a next iteration, see arrow 212 of Fig. 3, may be obtained as

$$w_k = f_e(e_k), \quad [\text{equation 10}],$$

where, in some embodiments, $f_e()$ is a monotonically increasing function that maps the magnitude of the residual errors $e_k$ e.g. to numbers between 0 and 1.

In some embodiments, for the mapping of the magnitude of the residual errors $e_k$ to the interval between 0 and 1, a function of the following types may be used: Andrew's sine wave, Huber loss, etc.

As already mentioned above, in some embodiments, if the residual error $e_k$ exceeds a pre-defined maximum value, the corresponding weight may be set to zero, e.g. such that the measurement - and thus also the receiver device, in some embodiments - is discarded.

In some embodiments, the above-described procedure may be iterated, see for example arrow 212 of Fig. 3, yielding a robust iteratively reweighted least squares (IRLS) estimator that can e.g. detect and/or reject receiver devices with outlier measurements and/or that can find weights for the remaining receiver devices or their measurements, respectively, e.g. based on their residual errors.

In some embodiments, e.g. after each m-th, m>=1, iteration, a difference of a current position estimate to position estimate of the previous iteration may be determined, e.g. computed, based on

$$\Delta = \left\|\hat{\mathbf{x}}_{WA,i} - \hat{\mathbf{x}}_{WA,i-1}\right\|, \quad [\text{equation 11}].$$

In some embodiments, the difference $\Delta$ may e.g. be compared to a pre-defined threshold $\varepsilon$, e.g. to check convergence.

In some embodiments, based on the comparison of the difference $\Delta$ with the pre-defined threshold $\varepsilon$, a termination criterion may be set, e.g. to stop the process, preventing further iterations to be made.

Further embodiments, see Fig. 1B, relate to an apparatus 100' comprising means 102' for determining 202 (Fig. 3) a set SET-POS-EST of position estimates for a mobile device UE, wherein each position estimate of the set of position estimates is associated with a) a specific one of a plurality of K many receiver devices configured to receive a reference signal from the mobile device or b) a specific one of a plurality of K many transmitter devices configured to transmit reference signals to the mobile device, and for determining 204, based at least on the set of position estimates, a set SET-RESID-ERR of residual errors associated with at least some position estimates of the set of position estimates.

Further embodiments, Fig. 2A, relate to a location server 10 for estimating a position of a mobile device UE which is configured to transmit at least one reference signal RS, e.g. a 5G NR SRS, comprising at least one apparatus 100, 100' according to the embodiments.

Further embodiments relate to a system 1000, 1000' for estimating a position of a mobile device UE, UE' which is configured to transmit at least one reference signal RS, comprising at least one apparatus 100, 100', 10' according to the embodiments and A) K, K>=2, many receiver devices RD1, ..., RDK (Fig. 2A) and/or B) K many transmitter devices TD1, TD2, ..., TDk, ..., TDK (Fig. 2B).

Further embodiments, Fig. 3, relate to a method comprising: determining 202 a set SET-POS-EST of position estimates for a mobile device, wherein each position estimate of the set of position estimates is associated with a) a specific one of a plurality of K many receiver devices configured to receive a reference signal from the mobile device or b) a specific one of a plurality of K many transmitter devices configured to transmit reference signals to the mobile device, and determining 204, based at least on the set of position estimates, a set SET-RESID-ERR of residual errors associated with at least some position estimates of the set of position estimates.

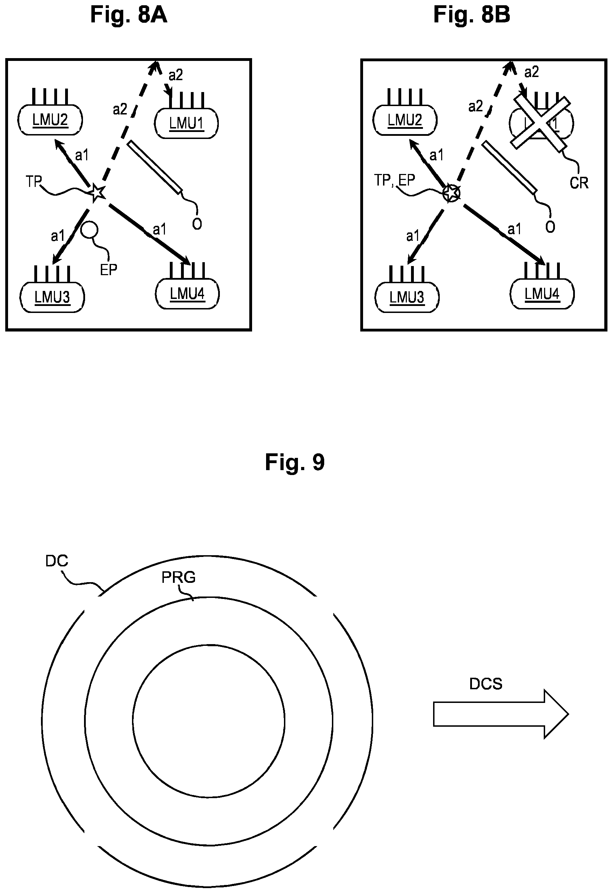

Fig. 8A and 8B schematically depict exemplary scenarios according to some embodiments. The star TP symbolizes a true position of a mobile device, e.g. UE, to be localized, and the reference sign EP symbolizes an estimated position. Element a1 symbolizes reference signals RS (Fig. 2A) transmitted by the UE, wherein dashed arrow a2 symbolizes a reflected RS. Obstacle O may e.g. prevent a direct LOS transmission of the reference signal to at least some receiver devices.

Also depicted in the present localization scenario are four receiver devices, e.g. LMUs, individually denoted as LMU1, LMU2, LMU3, LMU4 (2-D case for illustrative purposes), where the top right one (LMU1) measures a reflection a2 (only a reflection a2 is available, as the obstacle O blocks a direct LOS path from the true position of the UE to LMU1), producing wrong angular and ToA or TDoA measures.

In Fig. 8A, it is assumed, that LMU1 is not rejected, but rather used for determining position estimates, thus offsetting the position estimate EP due to the reflection a2, see the difference between EP and TP in Fig. 8A. By contrast, in Fig. 8B, LMU1 is rejected (or at least downweighted), based on the principle according to the embodiments, see the cross CR, thus enabling to provide an increased localization performance, as compared to the Fig. 8A scenario.

Further embodiments, Fig. 9, relate to a computer program product comprising instructions PRG which, when the program PRG is executed by a computer (e.g., comprising the processor 102 of Fig. 1A), cause the computer to carry out the method according to the embodiments.

Further embodiments relate to a data carrier signal DCS carrying and/or characterizing the computer program PRG.

The principle according to the embodiments provides a novel, for example TDoA-based, location estimation approach that, for example, has the ability to reject outlier measurements (or to reduce an influence of outlier measurements) and/or to weight e.g. the remaining measurements, e.g. according to, i.e. based on, the residual errors they produce.

In some embodiments, the approach may therefore not only be deployed e.g. as a standalone positioning solution, but can, in some embodiments, also be used in a larger framework, e.g. as a "pre-filtering" method that yields locator weights, e.g. for further, e.g. yet more elaborate, e.g. probabilistic, localization algorithms, and, for example, facilitates a convergence of, e.g. such maximum likelihood (ML) techniques, e.g. by providing a proper initial search point, e.g. for gradient optimization.

In the following, a further example, e.g. based on real-world data according to some embodiments, is presented. In some embodiments, an example using real-world data may help understanding the functionality of some exemplary embodiments. Exemplarily, a case with $K = 6$ LMUs and distance estimates $\hat{\mathbf{d}} = [19.53\ 22.06\ 21.10\ 17.16\ 20.94\ 26.07]$m m is considered, where the last measurement "26.07m" is an artificially created outlier (10 m more than actually measured). In some examples, e.g., taking the last LMU as the reference, leads to an inaccurate position estimate due to the outlier. Taking each LMU, according to some embodiments, as the reference once, by contrast, yields the residual errors $\mathbf{e} = [4.47\ 3.26\ 3.26\ 3.69\ 3.55\ 11.30]$m. The residual error of 11.3m obtained by taking the outlier LMU as the reference clearly stands out as the highest and can, in some embodiments, be removed, e.g. by properly defining the threshold above which weights are set to 0. After discarding this LMU according to some embodiments, the (remaining) residual errors of the next iteration, e.g. after convergence of the algorithm, are e = [0.33 0.56 0.32 0.93 0.31]m. Notice how the residuals of the remaining LMUs also get smaller, since the outlier measurement was removed and does not impact the TDoA measurements and subsequent iterations anymore. As a consequence, in some embodiments, not only a more accurate position estimate in general can be attained by the principle according to the embodiments, but, in some embodiments, the following additional advantages for probabilistic positioning are enabled: Good initial search point to facilitate the convergence, e.g. of gradient optimization, Outlier measurement does not contribute to a ML function.

**Claims**

1. An apparatus (100), comprising at least one processor (102), and at least one memory (104) storing instructions (106), the at least one memory (104) and the instructions (106) configured to, with the at least one processor (102), cause the apparatus (100) at least to determine (202) a set (SET-POS-EST) of position estimates for a mobile device (UE), wherein each position estimate of the set (SET-POS-EST) of position estimates is associated with a) a specific one of a plurality of K many receiver devices (RD1, RD2, ..., RDk, ..., RDK) configured to receive a reference signal (RS) from the mobile device (UE) or b) a specific one of a plurality of K many transmitter devices (TD1, TD2, ..., TDk, ..., TDK) configured to transmit reference signals (RS') to the mobile device (UE), and to determine (204), based at least on the set (SET-POS-EST) of position estimates, a set (SET-RESID-ERR) of residual errors associated with at least some position estimates of the set (SET-POS-EST) of position estimates, wherein the instructions (106), when executed by the at least one processor (102), cause the apparatus (100) to determine (240) a residual error $e_r$ of a position estimate associated with a) an r-th receiver device (RDr) or b) an r-th transmitter device (TDr) based on

$$e_r = \frac{1}{K-1} \sum_k \left| (\hat{d}_k - \hat{d}_r) - (\|\hat{\mathbf{x}}_{WA} - \mathbf{p}_k\| - \|\hat{\mathbf{x}}_{WA} - \mathbf{p}_r\|) \right|, \ k = 1, ..., r - 1, r + 1, ..., K$$

where-in $\hat{d}_k$ characterizes an estimated distance associated with a) the k-th receiver device (RDk) or b) the k-th transmitter device (TDk), wherein $\hat{d}_r$ characterizes an estimated distance associated with a) a reference receiver device (RDr) or b) a reference transmitter device (TDr), wherein $\hat{\mathbf{x}}_{WA}$ characterizes a weighted average position estimate, wherein $\mathbf{p}_k$ characterizes a position of a) the k-th receiver device (RDk) or b) the k-th transmitter device (TDk), wherein $\mathbf{p}_r$ characterizes a position of a) a reference receiver device (RDr) or b) a reference transmitter device (TDr).

2. The apparatus (100) according to claim 1, wherein the instructions (106), when executed by the at least one processor (102), cause the apparatus (100) to determine (206; 242) updated weights (W') for weighting the set (SET-POS-EST) of position estimates based on the set (SET-RESID-ERR) of residual errors.

3. The apparatus (100) according to claim 2, wherein the instructions (106), when executed by the at least one processor (102), cause the apparatus (100) to determine (208) an updated SET (SET-POS-EST') of position estimates based on the updated weights (W').

4. The apparatus (100) according to any of the preceding claims, wherein the instructions (106), when executed by the at least one processor (102), cause the apparatus (100) to determine (210) whether at least one termination criterion is met, and, based on the determination (210) whether the at least one termination criterion is met, to repeat (212) at least one of the preceding steps (202, 204, 206, 208).

5. The apparatus (100) according to at least one of the preceding claims, wherein the instructions (106), when executed by the at least one processor (102), cause the apparatus (100) to determine (220) estimated distances (EST-DIST) associated with a) the plurality of receiver devices (RD1, RD2, ..., RDk, ..., RDK) or b) the plurality of transmitter devices (TD1, TD2, ..., TDk, ..., TDK).

6. The apparatus (100) according to at least one of the preceding claims, wherein the instructions (106), when executed by the at least one processor (102), cause the apparatus (100) to determine (200; 222) initial weights (W-INIT) for weighting the set (SET-POS-EST) of position estimates associated with at least one of a) the plurality of receiver devices (RD1, RD2, ..., RDk, ..., RDK) or b) the plurality of transmitter devices (TD1, TD2, ..., TDk, ..., TDK).

7. The apparatus (100) according to claim 6, wherein the instructions (106), when executed by the at least one processor (102), cause the apparatus (100) to determine the initial weights (W-INIT) based on at least one of: i) a reliability of estimated distances (EST-DIST) associated with a) the plurality of receiver devices (RD1, RD2, ..., RDk, ..., RDK) or b) the plurality of transmitter devices (TD1, TD2, ..., TDk, ..., TDK), ii) predetermined initial weight values.

8. The apparatus (100) according to at least one of the preceding claims, wherein the instructions (106), when executed by the at least one processor (102), cause the apparatus (100) to determine (230) K many position estimates $\hat{\mathbf{x}}_1, \hat{\mathbf{x}}_Z, ..., \hat{\mathbf{x}}_K$, and to determine (232) a weighted average position estimate $\hat{\mathbf{x}}_{WA}$ based on the K many position estimates $\hat{\mathbf{x}}_1, \hat{\mathbf{x}}_2, ..., \hat{\mathbf{x}}_K$ and on at least one of initial weights (W-INIT) and updated weights (W') for weighting the set (SET-POS-EST) of position estimates.

9. The apparatus (100) according to at least one of the preceding claims, wherein the instructions (106), when executed by the at least one processor (102), cause the apparatus (100) to determine (250) whether a residual error of a position estimate associated with a) a k-th receiver device (RDk) or b) a k-th transmitter device (TDk) exceeds a threshold, and, if the residual error of the position estimate associated with a) a k-th receiver device (RDk) or b) a k-th transmitter device (TDk) exceeds the threshold, to discard (252) a) the k-th receiver device (RDk) or b) the k-th transmitter device (TDk) .

10. Location server (10) for estimating a position of a mobile device (UE) which is configured to transmit at least one reference signal (RS), comprising at least one apparatus (100; 100') according to any of the preceding claims.

11. Location server (10) according to claim 10, wherein the location server (10) is configured to receive received reference signals and/or signals derived from received reference signals from at least some of the K many receiver devices (RD1, ..., RDK).

12. System (1000; 1000') for estimating a position of a mobile device (UE) which is configured to a) transmit at least one reference signal (RS) and/or to b) receive reference signals (RS'), comprising at least one apparatus (100; 100') according to any of the claims 1 to 9 and A) K, K>=2, many receiver devices (RD1, RD2, ..., RDk, ..., RDK) and/or B) K many transmitter devices (TD1, TD2, ..., TDk, ..., TDK).

13. A method performed by an apparatus (100) comprising: determining (202) a set (SET-POS-EST) of position estimates for a mobile device (UE), wherein each position estimate of the set (SET-POS-EST) of position estimates is associated with a) a specific one of a plurality of K many receiver devices (RD1, RD2, ..., RDK) configured to receive a reference signal (RS) from the mobile device (UE) or b) a specific one of a plurality of K many transmitter devices (TD1, TD2, ..., TDk, ..., TDK) configured to transmit reference signals (RS') to the mobile device (UE), and determining (204), based at least on the set (SET-POS-EST) of position estimates, a set (SET-RESID-ERR) of residual errors associated with at least some position estimates of the set (SET-POS-EST) of position estimates, and determining (240) a residual error $e_r$ of a position estimate associated with a) an r-th receiver device (RDr) or b) an r-th transmitter device (TDr) based on

$$e_r = \frac{1}{K-1} \sum_k \left| (\hat{d}_k - \hat{d}_r) - \right|$$

$(\|\hat{\mathbf{x}}_{WA} - \mathbf{p}_k\| - \|\hat{\mathbf{x}}_{WA} - \mathbf{p}_r\|)$, $k = 1, ..., r - 1, r + 1, ..., K$ wherein $\hat{d}_k$ characterizes an estimated distance associated with a) the k-th receiver device (RDk) or b) the k-th transmitter device (TDk), wherein $\hat{d}_r$ characterizes an estimated distance associated with a) a reference receiver device (RDr) or b) a reference transmitter device (TDr), wherein $\hat{\mathbf{x}}_{WA}$ characterizes a weighted average position estimate, wherein $\mathbf{p}_k$ characterizes a position of a) the k-th receiver device (RDk) or b) the k-th transmitter device (TDk), wherein $\mathbf{p}_r$ characterizes a position of a) a reference receiver device (RDr) or b) a reference transmitter device (TDr).

14. The method according to claim 13, further comprising: determining (206; 242) updated weights (W') for weighting the set (SET-POS-EST) of position estimates based on the set (SET-RESID-ERR) of residual errors.

15. A computer program product comprising instructions (PRG; 106) which, when the program (PRG) is executed by a computer, cause the computer to carry out the method according to claim 13.

**Patentansprüche**

1. Einrichtung (100), die mindestens einen Prozessor (102) und mindestens einen Speicher (104) umfasst, in dem Anweisungen (106) gespeichert sind, wobei der mindestens eine Speicher (104) und die Anweisungen (106) dazu ausgelegt sind, die Einrichtung (100) mit dem mindestens einen Prozessor (102) zu veranlassen, mindestens einen Satz (SET-POS-EST) von Positionsschätzungen für eine mobile Vorrichtung (UE) zu bestimmen (202), wobei jede Positionsschätzung des Satzes (SET-POS-EST) von Positionsschätzungen mit a) einer spezifischen einer Vielzahl von *K* vielen Empfängervorrichtungen (RD1, RD2, ..., RDk, ..., RDK), die dazu ausgelegt sind, ein Referenzsignal (RS) von der mobilen Vorrichtung (UE) zu empfangen, oder b) einer spezifischen einer Vielzahl von *K* vielen Sendervorrichtungen (TD1, TD2, ..., TDk, ..., TDK), die dazu ausgelegt sind, Referenzsignale (RS') zur mobilen Vorrichtung (UE) zu übertragen, und mindestens auf Basis des Satzes (SET-POS-EST) von Positionsschätzungen, einen Satz (SET-RESID-ERR) von Restfehlern zu bestimmen (204), der mit mindestens einigen Positionsschätzungen des Satzes (SET-POS-EST) von Positionsschätzungen verknüpft ist, verknüpft ist, wobei die Anweisungen (106), wenn sie von dem mindestens einen Prozessor (102) ausgeführt werden, die Vorrichtung (100) veranlassen, auf Basis von $$e_r = \frac{1}{K-1}\sum_k \left| (\hat{d}_k - \hat{d}_r) - (\|\hat{X}_{WA} - p_k\| - \|\hat{X}_{WA} - p_r\|) \right|,\ k = 1, ..., r-1$$ , r + 1, ..., K einen Restfehler $e_r$ einer Positionsschätzung zu bestimmen (240), der mit a) einer r-ten Empfängervorrichtung (RDr) oder b) einer r-ten Sendervorrichtung (TDr) verknüpft ist, wobei $\hat{d}_k$ einen geschätzten Abstand kennzeichnet, der mit a) der k-ten Empfängervorrichtung (RDk) oder b) der k-ten Sendervorrichtung (TDk) verknüpft ist, wobei $\hat{d}_r$ einen geschätzten Abstand kennzeichnet, der mit a) einer Referenzempfängervorrichtung (RDr) oder b) einer Referenzsendervorrichtung (TDr) verknüpft ist, wobei $\hat{x}_{WA}$ eine gewichtete durchschnittliche Positionsschätzung kennzeichnet, wobei $p_k$ eine Position von a) der k-ten Empfängervorrichtung (RDk) oder b) der k-ten Sendervorrichtung (TDk) kennzeichnet, wobei $p_r$ eine Position von a) einer Referenzempfängervorrichtung (RDr) oder b) einer Referenzsendervorrichtung (TDr) kennzeichnet.

2. Einrichtung (100) nach Anspruch 1, wobei die Anweisungen (106), wenn sie von dem mindestens einen Prozessor (102) ausgeführt werden, die Einrichtung (100) veranlassen, aktualisierte Gewichtungen (W') zum Gewichten des Satzes (SET-POS-EST) von Positionsschätzungen auf Basis des Satzes (SET-RESID-ERR) von Restfehlern zu bestimmen (206; 242).

3. Einrichtung (100) nach Anspruch 2, wobei die Anweisungen (106), wenn sie von dem mindestens einen Prozessor (102) ausgeführt werden, die Einrichtung (100) veranlassen, auf Basis der aktualisierten Gewichtungen (W') einen aktualisierten Satz (SET-POS-EST') von Positionsschätzungen bestimmen (208).

4. Einrichtung (100) nach einem der vorhergehenden Ansprüche, wobei die Anweisungen (106), wenn sie von dem mindestens einen Prozessor (102) ausgeführt werden, die Einrichtung (100) veranlassen zu bestimmen (210), ob mindestens ein Abschlusskriterium erfüllt ist, und auf Basis der Bestimmung (210), ob das mindestens eine Abschlusskriterium erfüllt ist, mindestens einen der vorhergehenden Schritte (202, 204, 206, 208) zu wiederholen (212).

5. Einrichtung (100) nach mindestens einem der vorhergehenden Ansprüche, wobei die Anweisungen (106), wenn sie von dem mindestens einen Prozessor (102) ausgeführt werden, die Einrichtung (100) veranlassen, geschätzte Abstände (EST-DIST), die mit a) der Vielzahl von Empfängervorrichtungen (RD1, RD2, ..., RDk, ..., RDK) oder b) der Vielzahl von Sendervorrichtungen (TD1, TD2, ..., TDk, ..., TDK) verknüpft sind, zu bestimmen (220) .

6. Einrichtung (100) nach mindestens einem der vorhergehenden Ansprüche, wobei die Anweisungen (106), wenn sie von dem mindestens einen Prozessor (102) ausgeführt werden, die Einrichtung (100) veranlassen, anfängliche Gewichtungen (W-INIT) zum Gewichten des Satzes (SET-POS-EST) von Positionsschätzungen zu bestimmen (200; 222), die mit mindestens einem von a) der Vielzahl von Empfängervorrichtungen (RD1, RD2, ..., RDk, ..., RDK) oder b) der Vielzahl von Sendervorrichtungen (TD1, TD2, ..., TDk, ..., TDK) verknüpft sind.

7. Einrichtung (100) nach Anspruch 6, wobei die Anweisungen (106), wenn sie von dem mindestens einen Prozessor (102) ausgeführt werden, die Einrichtung (100) veranlassen, die anfänglichen Gewichtungen (W-INIT) auf Basis von mindestens einem von: i) einer Zuverlässigkeit von geschätzten Abständen (EST-DIST), die mit a) der Vielzahl von Empfängervorrichtungen (RD1, RD2, ..., RDk, ..., RDK) oder b) der Vielzahl von Sendervorrichtungen (TD1, TD2, ..., TDk, ..., TDK) verknüpft sind, ii) vorbestimmte anfängliche Gewichtungswerte zu bestimmen.

8. Einrichtung (100) nach mindestens einem der vorhergehenden Ansprüche, wobei die Anweisungen (106), wenn sie von dem mindestens einen Prozessor (102) ausgeführt werden, die Einrichtung (100) veranlassen, $K$ viele Positionsschätzungen $\hat{X}_1, \hat{X}_2, ..., \hat{X}_K$ zu bestimmen (230) und auf Basis der $K$ vielen Positionsschätzungen $\hat{X}_1, \hat{X}_2, ..., \hat{X}_K$ und von mindestens einer von anfänglichen Gewichtungen (W-INIT) und aktualisierten Gewichtungen (W') zum Gewichten des Satzes (SET-POS-EST) von Positionsschätzungen eine gewichtete durchschnittliche Positionsschätzung $\hat{X}_{WA}$ zu bestimmen (232) .

9. Einrichtung (100) nach mindestens einem der vorhergehenden Ansprüche, wobei die Anweisungen (106), wenn sie von dem mindestens einen Prozessor (102) ausgeführt werden, die Einrichtung (100) veranlassen zu bestimmen (250), ob ein Restfehler einer Positionsschätzung, die mit a) einer k-ten Empfängervorrichtung (RDk) oder b) einer k-ten Sendervorrichtung (TDk) verknüpft ist, einen Schwellwert überschreitet, und, wenn der Restfehler der Positionsschätzung, die mit a) einer k-ten Empfängervorrichtung (RDk) oder b) einer k-ten Sendervorrichtung (TDk) verknüpft ist, den Schwellwert überschreitet, a) die k-te Empfängervorrichtung (RDk) oder b) die k-te Sendervorrichtung (TDk) zu verwerfen (252).

10. Standortserver (10) zum Schätzen einer Position einer mobilen Vorrichtung (UE), die dazu ausgelegt ist, mindestens ein Referenzsignal (RS) zu übertragen, die mindestens eine Einrichtung (100; 100') nach einem der vorhergehenden Ansprüche umfasst.

11. Standortserver (10) nach Anspruch 10, wobei der Standortserver (10) dazu ausgelegt ist, empfangene Referenzsignale und/oder Signale, die von empfangenen Referenzsignalen abgeleitet sind, von mindestens einigen der K vielen Empfängervorrichtungen (RD1, ..., RDK) zu empfangen.

12. System (1000; 1000') zum Schätzen einer Position einer mobilen Vorrichtung (UE), die dazu ausgelegt ist, a) mindestens ein Referenzsignal (RS) zu übertragen, und/oder b) Referenzsignale (RS') zu empfangen, das mindestens eine Einrichtung (100; 100') nach einem der Ansprüche 1 bis 9 und A) *K, K >= 2,* viele Empfängervorrichtungen (RD1, RD2, RDk, ..., RDk, ..., RDK) und/oder B) *K* viele Sendervorrichtungen (TD1, TD2, ..., TDk, ..., TDK) umfasst.

13. Verfahren, das von einer Einrichtung (100) durchgeführt wird, das Folgendes umfasst: Bestimmen (202) eines Satz (SET-POS-EST) von Positionsschätzungen für eine mobile Vorrichtung (UE), wobei jede Positionsschätzung des Satzes (SET-POS-EST) von Positionsschätzungen mit a) einer spezifischen einer Vielzahl von *K* vielen Empfängervorrichtungen (RD1, RD2, ..., RDK), die dazu ausgelegt sind, ein Referenzsignal (RS) von der mobilen Vorrichtung (UE) zu empfangen, oder b) einer spezifischen einer Vielzahl von *K* vielen Sendervorrichtungen (TD1, TD2, ..., TDk, ..., TDK), die dazu ausgelegt sind, Referenzsignale (RS') zur mobilen Vorrichtung (UE) zu übertragen, und Bestimmen (204) mindestens auf Basis des Satzes (SET-POS-EST) von Positionsschätzungen, eines Satzes (SET-RESID-ERR) von Restfehlern, der mit mindestens einigen Positionsschätzungen des Satzes (SET-POS-EST) von Positionsschätzungen verknüpft ist, und Bestimmen (240) auf Basis von

$$e_r = \frac{1}{K-1}\sum_k \left| \left(\hat{d}_k - \hat{d}_r\right) - \left(\left\|\hat{X}_{WA} - p_k\right\| - \right.\right.$$

$$\left.\left.\left\|\hat{X}_{WA} - p_r\right\|\right)\right|, \ k = 1, ..., r-1, \ r+1, ... \ , \ K$$ einen Restfehler $e_r$ einer Positionsschätzung, der mit a) einer r-ten Empfängervorrichtung (RDr) oder b) einer r-ten Sendervorrichtung (TDr) verknüpft ist, wobei $\hat{d}_k$ einen geschätzten Abstand kennzeichnet, der mit der k-ten Empfängervorrichtung (RDk) oder b) der k-ten Sendervorrichtung (TDk) verknüpft ist, wobei $\hat{d}_r$ einen geschätzten Abstand kennzeichnet, der mit a) einer Referenzempfängervorrichtung (RDr) oder b) einer Referenzsendervorrichtung (TDr) verknüpft ist, wobei $\hat{x}_{WA}$ eine gewichtete durchschnittliche Positionsschätzung kennzeichnet, wobei $p_k$ eine Position von a) der k-ten Empfängervorrichtung (RDk) oder b) der k-ten Sendervorrichtung (TDk) kennzeichnet, wobei $p_r$ eine Position von a) einer Referenzempfängervorrichtung (RDr) oder b) einer Referenzsendervorrichtung (TDr) kennzeichnet.

14. Verfahren nach Anspruch 13, das ferner Folgendes umfasst: Bestimmen (206; 242) von aktualisierten Gewichtungen (W') zum Gewichten des Satzes (SET-POS-EST) von Positionsschätzungen auf Basis des Satzes (SET-RESID-ERR) von Restfehlern.

15. Computerprogrammprodukt, das Anweisungen (PRG; 106) umfasst, die, wenn das Programm (PRG) von einem Computer ausgeführt wird, den Computer veranlassen, das Verfahren nach Anspruch 13 umzusetzen.

**Revendications**

1. Appareil (100), comprenant au moins un processeur (102), et au moins une mémoire (104) stockant des instructions (106), l'au moins une mémoire (104) et les instructions (106) étant configurées pour, avec l'au moins un processeur (102), amener l'appareil (100) au moins à déterminer (202) un ensemble (SET-POS-EST) d'estimations de position pour un dispositif mobile (UE), dans lequel chaque estimation de position de l'ensemble (SET-POS-EST) d'estimations de position est associée a) à un dispositif récepteur spécifique d'une pluralité de K nombreux dispositifs récepteurs (RD1, RD2, ..., RDk, ..., RDK) configurés pour recevoir un signal de référence (RS) du dispositif mobile (UE) ou b) à un dispositif émetteur spécifique d'une pluralité de K nombreux dispositifs émetteurs (TD1, TD2, ..., TDk, ..., TDK) configurés pour émettre des signaux de référence (RS') vers le dispositif mobile (UE), et pour déterminer (204), sur la base au moins de l'ensemble (SET-POS-EST) d'estimations de position, un ensemble (SET-RESID-ERR) d'erreurs résiduelles associées à au moins certaines estimations de position de l'ensemble (SET-POS-EST) d'estimations de position, dans lequel les instructions (106), lorsqu'elles sont exécutées par l'au moins un processeur (102), amènent l'appareil (100) à déterminer (240) une erreur résiduelle $e_r$ d'une estimation de position associée a) à un $r^{\text{ième}}$ dispositif récepteur (RDr) ou b) à un $r^{\text{ième}}$ dispositif émetteur (TDr) sur la base de $e_r =$

$$\frac{1}{K-1}\sum_k\left|(\hat{d}_k - \hat{d}_r) - (\|\hat{X}_{WA} - p_k\| - \|\hat{X}_{WA} - p_r\|)\right|, k = 1, \ldots, r-1, r+1, \ldots K$$

, où $\hat{d}_k$ caractérise une distance estimée associée a) au $k^{\text{ième}}$ dispositif récepteur (RDk) ou b) au $k^{\text{ième}}$ dispositif émetteur (TDk), où $\hat{d}_r$ caractérise une distance estimée associée a) à un dispositif récepteur de référence (RDr) ou b) à un dispositif émetteur de référence (TDr), où $\hat{X}_{WA}$ caractérise une estimation de position moyenne pondérée, où $p_k$ caractérise une position a) du $k^{\text{ième}}$ dispositif récepteur (RDk) ou b) du $k^{\text{ième}}$ dispositif émetteur (TDk), où $p_r$ caractérise une position a) d'un dispositif récepteur de référence (RDr) ou b) d'un dispositif émetteur de référence (TDr).

2. Appareil (100) selon la revendication 1, dans lequel les instructions (106), lorsqu'elles sont exécutées par l'au moins un processeur (102), amènent l'appareil (100) à déterminer (206 ; 242) des poids mis à jour (W') pour pondérer l'ensemble (SET-POS-EST) d'estimations de position sur la base de l'ensemble (SET-RESID-ERR) d'erreurs résiduelles.

3. Appareil (100) selon la revendication 2, dans lequel les instructions (106), lorsqu'elles sont exécutées par l'au moins un processeur (102), amènent l'appareil (100) à déterminer (208) un ensemble mis à jour (SET-POS-EST') d'estimations de position sur la base des poids mis à jour (W').

4. Appareil (100) selon l'une des revendications précédentes, dans lequel les instructions (106), lorsqu'elles sont exécutées par l'au moins un processeur (102), amènent l'appareil (100) à déterminer (210) si au moins un critère de fin est rempli, et en déterminant (210) si l'au moins un critère de fin est rempli, à répéter (212) au moins l'une des étapes précédentes (202, 204, 206, 208).

5. Appareil (100) selon au moins l'une des revendications précédentes, dans lequel les instructions (106), lorsqu'elles sont exécutées par l'au moins un processeur (102), amènent l'appareil (100) à déterminer (220) des distances estimées (EST-DIST) associées a) à la pluralité de dispositifs récepteurs (RD1, RD2, ..., RDk, ..., RDK) ou b) à la pluralité de dispositifs émetteurs (TD1, TD2, ..., TDk, ..., TDK) .

6. Appareil (100) selon au moins l'une des revendications précédentes, dans lequel les instructions (106), lorsqu'elles sont exécutées par l'au moins un processeur (102), amènent l'appareil (100) à déterminer (200 ; 222) des poids initiaux (W-INIT) pour pondérer l'ensemble (SET-POS-EST) d'estimations de position associé à a) la pluralité de dispositifs récepteurs (RD1, RD2, ..., RDk, ..., RDK) et/ou b) à la pluralité de dispositifs émetteurs (TD1, TD2, ..., TDk, ..., TDK) .

7. Appareil (100) selon la revendication 6, dans lequel les instructions (106), lorsqu'elles sont exécutées par l'au moins un processeur (102), amènent l'appareil (100) à déterminer les poids initiaux (W-INIT) sur la base: i) d'une fiabilité des distances estimées (EST-DIST) associées a) à la pluralité de dispositifs récepteurs (RD1, RD2, ..., RDk, ..., RDK) ou b) à la pluralité de dispositifs émetteurs (TD1, TD2, ..., TDk, ..., TDK), ii) et/ou de valeurs de poids initiaux prédéterminées.

8. Appareil (100) selon au moins l'une des revendications précédentes, dans lequel les instructions (106), lorsqu'elles sont exécutées par l'au moins un processeur (102), amènent l'appareil (100) à déterminer (230) K nombreuses estimations de position $\hat{x}_1, \hat{x}_2, ..., \hat{x}_K$, et à déterminer (232) une estimation de position moyenne pondérée $\hat{x}_{WA}$ sur la base des K nombreuses estimations de position $\hat{x}_1, \hat{x}_2, ..., \hat{x}_K$, et d'au moins un des poids initiaux (W-INIT) et des poids mis à jour (W') pour pondérer l'ensemble (SET-POS-EST) d'estimations de position.

9. Appareil (100) selon au moins l'une des revendications précédentes, dans lequel les instructions (106), lorsqu'elles sont exécutées par l'au moins un processeur (102), amènent l'appareil (100) à déterminer (250) si une erreur résiduelle d'une estimation de position associée a) à un $k^{\text{ième}}$ dispositif récepteur (RDk) ou b) à un $k^{\text{ième}}$ dispositif émetteur (TDk) dépasse un seuil, et si l'erreur erreur résiduelle de l'estimation de position associée a) à un $k^{\text{ième}}$ dispositif récepteur (RDk) ou b) à un $k^{\text{ième}}$ dispositif émetteur (TDk) dépasse le seuil, à écarter (252) a) le $k^{\text{ième}}$ dispositif récepteur (RDk) ou b) le $k^{\text{ième}}$ dispositif émetteur (TDk) .

10. Serveur de localisation (10) pour l'estimation d'une position d'un dispositif mobile (UE) qui est configuré pour émettre au moins un signal de référence (RS), comprenant au moins un appareil (100 ; 100') selon l'une des revendications précédentes.

11. Serveur de localisation (10) selon la revendication 10, dans lequel le serveur de localisation (10) est configuré pour recevoir des signaux de référence reçus et/ou des signaux dérivés des signaux de référence reçus d'au moins certains des K nombreux dispositifs récepteurs (RD1, ..., RDK).

12. Système (1000 ; 1000') d'estimation d'une position d'un dispositif mobile (UE) qui est configuré pour a) émettre au moins un signal de référence (RS) et/ou pour b) recevoir des signaux de référence (RS'), comprenant au moins un appareil (100 ; 100') selon l'une des revendications 1 à 9 et A) K nombreux dispositifs récepteurs (RD1, RD2, ..., RDk, ..., RDK), K>=2, et/ou B) K nombreux dispositifs émetteurs (TD1, TD2, ..., TDk, ..., TDK) .

13. Procédé réalisé par un appareil (100) comprenant : la détermination (202) d'un ensemble (SET-POS-EST) d'estimations de position pour un dispositif mobile (UE), dans lequel chaque estimation de position de l'ensemble (SET-POS-EST) d'estimations de position est associée a) à un dispositif récepteur spécifique d'une pluralité de K nombreux dispositifs récepteurs (RD1, RD2, ..., RDK) configurés pour recevoir un signal de référence (RS) du dispositif mobile (UE) ou b) à un dispositif émetteur spécifique d'une pluralité de K nombreux dispositifs émetteurs (TD1, TD2, ..., TDk, ..., TDK) configurés pour émettre des signaux de référence (RS') vers le dispositif mobile (UE), et déterminer (204), sur la base au moins de l'ensemble (SET-POS-EST) d'estimations de position, un ensemble (SET-RESID-ERR) d'erreurs résiduelles associées à au moins certaines estimations de position de l'ensemble (SET-POS-EST) d'estimations de position, et déterminer (240) une erreur résiduelle $e_r$ d'une estimation de position associée a) à un $r^{\text{ième}}$ dispositif récepteur (RDr) ou b) à un $r^{\text{ième}}$ dispositif émetteur (TDr) sur la base de

$$e_r = \frac{1}{K-1} \sum_k \left| \left( \hat{d}_k - \hat{d}_r \right) - \left( \| \hat{X}_{WA} - p_k \| - \| \hat{X}_{WA} - p_r \| \right) \right|, k = 1, ..., r-1, r+1, ... K,$$

où $\hat{d}_k$ caractérise une distance estimée associée a) au $k^{\text{ième}}$ dispositif récepteur (RDk) ou b) au $k^{\text{ième}}$ dispositif émetteur (TDk), où $\hat{d}_r$ caractérise une distance estimée associée a) à un dispositif récepteur de référence (RDr) ou b) à un dispositif émetteur de référence (TDr), où $\hat{X}_{WA}$ caractérise une estimation de position moyenne pondérée, où $p_k$ caractérise une position a) du $k^{\text{ième}}$ dispositif récepteur (RDk) ou b) du $k^{\text{ième}}$ dispositif émetteur (TDk), où $p_r$ caractérise une position a) d'un dispositif récepteur de référence (RDr) ou b) d'un dispositif émetteur de référence (TDr).

14. Procédé selon la revendication 13, comprenant en outre :
la détermination (206 ; 242) de poids mis à jour (W') pour pondérer l'ensemble (SET-POS-EST) d'estimations de position sur la base de l'ensemble (SET-RESID-ERR) d'erreurs résiduelles.

15. Produit programme informatique comprenant des instructions (PRG ; 106) qui, lorsque le programme (PRG) est exécuté par un ordinateur, amènent l'ordinateur à mettre en œuvre le procédé selon la revendication 13.

# Fig. 1A

# Fig. 1B

MEANS FOR DETERMINING
A SET OF POSITION
ESTIMATES FOR A MOBILE
DEVICE

# Fig. 2A

# Fig. 2B

# Fig. 3

200

DETERMINE INITIAL WEIGHT(S) FOR AT LEAST ONE DEVICE

W-INIT

202

DETERMINE SET OF POSITION ESTIMATES FOR MOBILE DEVICE

SET-POS-EST

204

DETERMINE SET OF RESIDUAL ERRORS ASSOCIATED WITH AT LEAST SOME POSITION ESTIMATES OF SET OF POSITION ESTIMATES

SET-RESID-ERR

206

DETERMINE UPDATED WEIGHTS FOR WEIGHTING SET OF POSITION ESTIMATES BASED ON SET OF RESIDUAL ERRORS

212

W'

208

DETERMINE UPDATED SET OF POSITION ESTIMATES BASED ON UPDATED WEIGHTS

SET-POS-EST'

210

DETERMINE WHETHER TERMINATION CRITERION IS MET

# Fig. 4

220 — DETERMINE ESTIMATED DISTANCES ASSOCIATED WITH PLURALITY OF DEVICES

$\downarrow$ EST-DIST

222 — DETERMINE INITIAL WEIGHT(S) BASED ON AT LEAST ONE OF RELIABILITY OF ESTIMATED DISTANCES ASSOCIATED WITH PLURALITY OF DEVICES AND PREDETERMINED INITIAL WEIGHT VALUES

$\downarrow$ W-INIT

# Fig. 5

230 — DETERMINE K MANY POSITION ESTIMATES

$\downarrow$ $\hat{\mathbf{x}}_1, \hat{\mathbf{x}}_2, \ldots, \hat{\mathbf{x}}_K$

232 — DETERMINE WEIGHTED AVERAGE POSITION ESTIMATE BASED ON K MANY POSITION ESTIMATES AND ON AT LEAST ONE OF INITIAL WEIGHTS AND UPDATED WEIGHTS

$\downarrow$ $\hat{\mathbf{x}}_{WA}$

## Fig. 6

240 — DETERMINE RESIDUAL ERROR OF POSITION ESTIMATE ASSOCIATED WITH k-TH RECEIVER DEVICE OR TRANSMITTER DEVICE

$e_k$

242 — DETERMINE UPDATED WEIGHT(S) FOR WEIGHTING SET OF POSITION ESTIMATES BASED ON RESIDUAL ERROR(S)

W'

## Fig. 7

250 — DETERMINE WHETHER RESIDUAL ERROR OF POSITION ESTIMATE ASSOCIATED WITH k-TH RECEIVER DEVICE OR TRANSMITTER DEVICE EXCEEDS THRESHOLD

252 — DISCARD k-TH RECEIVER DEVICE OR TRANSMITTER DEVICE IF RESIDUAL ERROR OF POSITION ESTIMATE ASSOCIATED WITH k-TH RECEIVER DEVICE OR TRANSMITTER DEVICE EXCEEDS THRESHOLD

# Fig. 8A

# Fig. 8B

# Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021207707 A2